# EUROPÄISCHE PATENTSCHRIFT

(11) **EP 3 495 632 B1**
(45) Veröffentlichungstag und Bekanntmachung des Hinweises auf die Patenterteilung: **05.05.2021**
(21) Anmeldenummer: 18209800.4
(22) Anmeldetag: 03.12.2018
(51) Int. Cl.: F01D 25/28, B64D 27/26, F02C 7/20, B64D 27/14, F02C 7/32

(54) **INTEGRIERTE TRAGSTRUKTUR FÜR EIN FLUGZEUGTRIEBWERK UND DESSEN ZUBEHÖRKOMPONENTEN**
INTEGRATED SUPPORT STRUCTURE FOR AN AIRCRAFT ENGINE AND COMPONENT PARTS THEREOF
STRUCTURE PORTANTE INTÉGRÉE POUR UN MOTEUR D'AVION ET SES COMPOSANTS ACCESSOIRES

(30) Priorität: 06.12.2017 DE 102017129060
(43) Veröffentlichungstag der Anmeldung: 12.06.2019
(73) Patentinhaber: Rolls-Royce Deutschland Ltd & Co KG, 15827 Blankenfelde-Mahlow (DE)
(72) Erfinder: BUCHHOLZ, Carsten, 15827 Blankenfelde-Mahlow (DE)
(74) Vertreter: Maikowski & Ninnemann Patentanwälte Partnerschaft mbB

(56) Entgegenhaltungen:
- EP-A1- 2 965 991
- DE-A1- 2 720 957
- US-A- 4 044 973
- US-A- 5 065 959
- US-A1- 2017 259 928

## Beschreibung

Die Erfindung betrifft eine Tragstrukturanordnung zur Befestigung eines Flugzeugtriebwerks an einem Flugzeug nach Anspruch 1 und ein Flugzeug.

Flugzeugtriebwerke werden regelmäßig mittels einem als Tragstruktur dienenden Triebwerkspylon an einem Rumpf oder Flügel eines Flugzeugs befestigt. Um im Betrieb des Flugzeugtriebwerks einwirkenden Kräften und Materialausdehnungen durch Temperaturänderungen Rechnung zu tragen, sind bekannte Flugzeugtriebwerke derart statisch bestimmt am Triebwerkspylon gelagert, dass jede Lagerstelle zumindest einen Freiheitsgrad aufweist. Die US 9,416,734 B2 beschreibt eine solche Lagerung.

Ein Ziel bei der Entwicklung von Flugzeugen und Flugzeugtriebwerken ist eine Reduzierung des Treibstoffverbrauchs und eine Vergrößerung der Reichweite des Flugzeugs. Dabei spielt der Luftwiderstand des Flugzeugs eine große Rolle. Hierzu tragen auch die Gehäuse der Flugzeugtriebwerke bei. Durch ein Gehäuse mit einer bei gleichbleibender Triebwerksleistung kleineren Querschnittsfläche könnte der Luftwiderstand effektiv reduziert werden.

Aus der US 4,068,470 A ist es bekannt, eine Zubehörkomponente des Flugzeugtriebwerks aus der Triebwerksgondel auszulagern und in einem Triebwerkspylon anzuordnen, um so den Querschnitt der Triebwerksgondel zu verringern. Eine weitere Auslagerung von Zubehörkomponenten in den Triebwerkspylon ist mit der beschriebenen Anordnung jedoch nicht ohne weiteres möglich.

Die Druckschrift US2017/259928 A1 beschreibt eine Tragstrukturanordnung, wobei ein Triebwerk an einer Halterung montiert ist. Die Halterung ist wiederum am Flugzeug montiert. Moderne Flugzeugtriebwerke umfassen zudem regelmäßig eine Vielzahl von Zubehörkomponenten, wie etwa ein Steuerungssystem, eine Treibstoffzufuhreinrichtung, ein Zubehörgetriebe und weitere Komponenten. Bisweilen ist es dabei möglich, dass zwischen den Zubehörkomponenten ein ungenutzter Bauraum existiert.

Es besteht die Aufgabe, eine verbesserte Tragstrukturanordnung bereitzustellen, die es insbesondere ermöglicht, den Luftwiderstand weiter zu reduzieren.

Die Aufgabe wird durch eine Tragstrukturanordnung mit den Merkmalen des Anspruchs 1 gelöst.

Danach umfasst eine Tragstrukturanordnung zur Befestigung eines Flugzeugtriebwerks an einem Flugzeug ein tragendes Strukturelement des Flugzeugtriebwerks und eine Tragstruktur. Die Tragstruktur weist zumindest einen Träger und zumindest ein Lager auf. Mittels dem zumindest einen Lager ist der zumindest eine Träger mit dem Flugzeug verbindbar oder verbunden. Es ist vorgesehen, dass der Träger mittels einer (insbesondere vom Lager beabstandeten) Verbindungseinrichtung starr mit dem tragenden Strukturelement des Flugzeugtriebwerks verbindbar oder verbunden ist und einen Verbindungsabschnitt umfasst, der in flächiger Anlage mit einem Verbindungsabschnitt eines Gehäuses oder einer Kerntriebwerkshülle des Flugzeugtriebwerks steht.

Mit der Tragstrukturanordnung ist das Flugzeugtriebwerk derart am Flugzeug montiert oder montierbar, dass es statisch bestimmt am Flugzeug gelagert ist. Das montierte Flugzeugtriebwerk ist in allen sechs Freiheitsgraden (drei Rotationsfreiheitsgrade und drei Translationsfreiheitsgrade) am Flugzeug festgelegt.

Da die Verbindungseinrichtung eine starre Verbindung bereitstellt, kann sie besonders platzsparend ausgeführt werden. Der benötigte Bauraum am Flugzeugtriebwerk kann dadurch deutlich verringert werden. Hierdurch ist es möglich, ein Gehäuse des Flugzeugtriebwerks mit einem kleineren Durchmesser quer zu einer Hauptrotationsachse des Flugzeugtriebwerks auszubilden. Im Ergebnis sind eine verringerte Querschnittsfläche und damit ein wesentlich reduzierter Luftwiderstand erzielbar, wodurch die Reichweite des Flugzeugs gesteigert und/oder der Treibstoffverbrauch des Flugzeugs reduziert werden können.

Das zumindest eine Lager kann mindestens einen Freiheitsgrad aufweisen, insbesondere genau einen Freiheitsgrad. Insbesondere durch eine flugzeugseitige Lagerung des Trägers oder der Träger mit jeweils zumindest einem Freiheitsgrad pro Lager ist es möglich, den im Betrieb des Flugzeugtriebwerks einwirkenden Kräften und Materialausdehnungen infolge von Temperaturänderungen Rechnung zu tragen. Durch den zumindest einen Freiheitsgrad erlaubt das Lager eine Bewegung zwischen den durch das Lager miteinander verbundenen Komponenten. Als zumindest einen Freiheitsgrad kann das mindestens eine Lager z.B. einen Rotationsfreiheitsgrad (z.B. in Form eines um eine Achse rotierbaren Gleitlagers) und/oder einen Translationsfreiheitsgrad aufweisen.

Die Tragstrukturanordnung ermöglicht eine Vermeidung von kritischen Schwingformen in Frequenzbereichen, bei denen ansonsten Unwuchtanregungen, insbesondere über längere Zeiträume, auftreten könnten. Hierdurch können sowohl das Gewicht der Tragstrukturanordnung reduziert als auch die Sicherheit erhöht werden.

Die starre Verbindung des Trägers (oder jedes von mehreren Trägern) mit dem tragenden Strukturelement des Flugzeugtriebwerks durch die Verbindungseinrichtung weist keinen Freiheitsgrad auf. Die Verbindungseinrichtung kann eine lösbare oder eine unlösbare Verbindung bereitstellen. Beispielsweise ist die Verbindungseinrichtung als Flanschverbindung ausgebildet oder umfasst eine Flanschverbindung, insbesondere mit einer Vielzahl von lösbaren Schrauben oder Bolzen. Auch kann die Verbindungseinrichtung als Schwalbenschwanzverbindung ausgebildet sein oder eine Schwalbenschwanzverbindung umfassen. Alternativ kann die Verbindungseinrichtung eine stoffschlüssige Verbindung sein. Zum Beispiel ist die Verbindungseinrichtung eine Schweißverbindung. Mittels der Verbindungseinrichtung können der Träger und das tragende Strukturelement einstückig verbunden sein.

Das tragende Strukturelement des Flugzeugtriebwerks ist ausgebildet, die übrigen Triebwerksbauteile zu tragen.

Die Tragstruktur ist z.B. als Triebwerkspylon ausgebildet. Bei dem Flugzeugtriebwerk handelt es sich insbesondere um ein Strahltriebwerk, z.B. um ein Turbofan-Triebwerk. Das tragende Strukturelement des Flugzeugtriebwerks ist z.B. ein Teil eines Gehäuses (oder das Gehäuse) oder ein Teil einer Kerntriebwerkshülle (oder die Kerntriebwerkshülle) des Flugzeugtriebwerks.

In einer Ausgestaltung sind zwei oder mehr Lager vorgesehen, mittels denen der Träger jeweils mit dem Flugzeug verbindbar oder verbunden ist. Jedes dieser Lager weist optional zumindest einen Freiheitsgrad auf, insbesondere jeweils genau einen Freiheitsgrad. Im mit dem Flugzeug mittels der Lager verbundenen Zustand weist das tragende Strukturelement keinen Freiheitsgrad gegenüber dem Flugzeug auf. Auf diese Weise ist eine sichere Befestigung des Flugzeugtriebwerks am Flugzeug möglich, die Ausdehnungen und Kontraktionen infolge von Temperaturänderungen sowie elastische Verformungen infolge von im Betrieb auftretenden Kräften der Bauteile des Flugzeugtriebwerks, der Tragstruktur und des Flugzeugs erlaubt. Beispielsweise sind ein oder mehrere Lager als Bolzenverbindung ausgeführt, die jeweils eine Rotation um eine Achse erlaubt. Die zwei oder mehr Lager sind beabstandet voneinander, insbesondere in einer Richtung parallel zur Hauptrotationsachse des Flugzeugtriebwerks. Bevorzugt sind zumindest drei (insbesondere drei, vier oder sechs) Lager vorgesehen, die insbesondere in (zumindest) zwei Richtungen voneinander beabstandet angeordnet sind.

Der zumindest eine Träger kann zumindest zwei Lager zur Verbindung des Trägers mit dem Flugzeug aufweisen, deren Abstand zueinander entlang einer direkten Verbindungslinie größer ist, als der minimale Durchmesser der Tragstruktur zwischen dem Flugzeugtriebwerk und dem Flugzeug in einer Richtung parallel zur direkten Verbindungslinie zwischen den zumindest zwei Lagern. Durch die großen Abstände können die zu übertragenden Kräfte reduziert werden. Hierdurch wird eine besonders stabile Anbindung an das Flugzeug ermöglicht. Jedes dieser beiden Lager kann zumindest einen Freiheitsgrad aufweisen, insbesondere genau einen Freiheitsgrad.

Die Tragstruktur kann zwei oder mehr beabstandete Träger umfassen. Insbesondere können zwei oder mehr Träger axial in Bezug auf die Hauptrotationsachse des Flugzeugtriebwerks beabstandet voneinander sein. Hierdurch, insbesondere bei großen Abständen zwischen den Trägern, ist eine besonders stabile Tragstruktur möglich.

In einer Weiterbildung ist vorgesehen, dass in einem mit dem Flugzeugtriebwerk verbundenen Zustand der Träger das oder die Lager eines Trägers der zumindest zwei Träger (jeweils) einen Abstand zu dem Lager oder den Lagern eines anderen der zumindest zwei Träger aufweist/aufweisen, der größer ist als eine Länge eines Kerntriebwerks und/oder eines Gehäuses des Flugzeugtriebwerks (in Richtung der Hauptrotationsachse des Flugzeugtriebwerks) und/oder als die Gesamtlänge des Flugzeugtriebwerks in Richtung der Hauptrotationsachse des Flugzeugtriebwerks. Durch die starren Verbindungen kann diese Anordnung demgegenüber eine besonders hohe Stabilität aufweisen.

Optional ist zumindest eine Zubehörkomponente des Flugzeugtriebwerks zwischen den zumindest zwei insbesondere axial beabstandeten Trägern der Tragstruktur angeordnet. In diesem Zwischenraum zwischen den Trägern kann die Zubehörkomponente besonders platzsparend untergebracht werden. Es muss kein Platz innerhalb des Gehäuses des Flugzeugtriebwerks bereitgestellt werden, sodass das Gehäuse besonders schmal ausgeführt werden kann.

Zumindest eine Zubehörkomponente kann ein Getriebe, eine Leitungsanordnung, eine Versorgungseinrichtung und/oder einen Steuerungscomputer umfassen. Optional sind im Wesentlichen sämtliche Zubehörkomponenten des Flugzeugtriebwerks im Zwischenraum zwischen den Trägern angeordnet.

In einer Weiterbildung ist ein zwischen den zumindest zwei (insbesondere axial) beabstandeten Trägern der Tragstruktur angeordneter Installationsrahmen vorgesehen. Optional kann hierbei ein Installationsrahmen vorgesehen werden, wie er in der US 9,416,734 B2 beschrieben ist, wobei hier insbesondere auf die Lagerung des Installationsrahmens Bezug genommen wird. An dem Installationsrahmen ist die zumindest eine Zubehörkomponente montiert oder montierbar. Ein solcher Installationsrahmen kann insbesondere mehrere Zubehörkomponenten tragen. Diese können somit gemeinsam ein- und ausgebaut werden und auch gemeinsam auf ihre Funktion überprüft werden, z.B. an einem Teststand, wie etwa einem Rütteltisch. Die Überprüfung und Wartung der Zubehörkomponenten kann somit erheblich vereinfacht werden.

Optional ist zumindest ein Stoßdämpfer und/oder Vibrations-Isolator vorgesehen, mittels dem der Installationsrahmen am Flugzeugtriebwerk, an der Befestigungseinrichtung und/oder am Flugzeug gelagert oder lagerbar ist. Hierdurch kann für sämtliche am Installationsrahmen montierten Zubehörkomponenten gemeinsam eine Dämpfung gegen Vibrationen und Erschütterungen bereitgestellt werden. Gegenüber einer jeweils separaten Dämpfung einzelner Zubehörkomponenten ermöglicht dies einen wesentlich einfacheren Aufbau.

In einer Ausgestaltung umfasst das Lager oder jedes von mehreren Lagern ein elastisches Element (oder allgemein einen Stoßdämpfer). Das elastische Element (oder der Stoßdämpfer) ist im mit dem Flugzeug verbundenen Zustand im Lastpfad angeordnet. Eine auf das Flugzeugtriebwerk einwirkende Kraft fließt somit durch das elastische Element (den Stoßdämpfer) in das Flugzeug. Auf diese Weise können eine Entkoppelung von Schwingungen und ein Ausgleich von Verformungen bereitgestellt werden. Das elastische Element (der Stoßdämpfer) kann den zumindest einen Freiheitsgrad des Lagers bereitstellen. Das elastische Element umfasst beispielsweise ein Gummi und/oder ein Metallgewebe oder besteht daraus.

Gemäß einem Aspekt wird eine Anordnung bereitgestellt, die eine Tragstrukturanordnung nach einer beliebigen, hierin beschriebenen Ausführung und das Flugzeugtriebwerk umfasst.

Gemäß einem Aspekt wird ein Flugzeug bereitgestellt. Das Flugzeug umfasst einen Rumpf und zumindest ein Flugzeugtriebwerk. Dabei ist eine Tragstrukturanordnung nach einer beliebigen, hierin beschriebenen Ausführung vorgesehen, wobei das Flugzeugtriebwerk mittels der Tragstruktur der Tragstrukturanordnung am Rumpf des Flugzeugs befestigt ist, und zwar insbesondere im Bereich eines Hecks des Flugzeugs. Ein solches Flugzeug kann einen besonders geringen Luftwiderstand aufweisen. Hierdurch können die Reichweite des Flugzeugs gesteigert und/oder der Treibstoffverbrauch des Flugzeugs reduziert werden.

Jedes der Lager des einen oder der mehreren Träger kann eine Befestigungsstelle umfassen, die fest mit dem Rumpf des Flugzeugs verbunden ist, und die in einer gegenüber einer äußeren Hülle des Rumpfs des Flugzeugs zurückgesetzten Tasche oder Aussparung angeordnet ist. Hierdurch ist eine weitere Reduzierung des Luftwiderstandes des Flugzeugs möglich. Zudem kann der Raum der Tasche, insbesondere zwischen mehreren Trägern, als zusätzlicher Bauraum für Zubehörkomponenten des Flugzeugtriebwerks verwendet werden. Hierdurch kann der Abstand zwischen dem Flugzeugtriebwerk und dem Flugzeug reduziert werden, was noch eine weitere Reduktion des Luftwiderstandes ermöglicht.

Gemäß einem Aspekt wird ein Verfahren zur Herstellung einer Tragstrukturanordnung nach einer beliebigen, hierin beschriebenen Ausgestaltung bereitgestellt. Die Tragstruktur umfasst dabei zumindest zwei voneinander beabstandete Träger. Dabei wird mittels einer Topologieoptimierung (insbesondere in einem iterativen Prozess) zumindest eines von einem Abstand der Träger zueinander (z.B. ein minimaler Abstand und/oder ein Abstand zwischen flugzeugseitigen Befestigungsstellen), einer Höhe, Dicke und/oder Breite von jedem der Träger und einer relativen Materialverteilung der Träger ermittelt (z.B. umfasst der vordere Träger zumindest doppelt so viel Material wie der hintere Träger). Die Tragstrukturanordnung wird dementsprechend gefertigt und kann an einem Flugzeug montiert werden.

Im Zusammenhang mit den in den Figuren dargestellten Ausführungsbeispielen wird die Erfindung erläutert. Dabei zeigen
Fig. 1 eine schematische perspektivische Darstellung eines Flugzeugs mit im Bereich eines Hecks des Flugzeugs angeordneten Flugzeugtriebwerken;
Fig. 2 eine schematische Querschnittsdarstellung eines Teiles des Flugzeugs gemäß Fig. 1 mit einem der Flugzeugtriebwerke und mit einer Ausführungsform einer Tragstrukturanordnung;
Fig. 3 eine schematische Draufsicht auf den in Fig. 2 gezeigten Teil des Flugzeugs mit dem Flugzeugtriebwerk und der Tragstrukturanordnung;
Fig. 4 eine schematische Querschnittsdarstellung eines Teiles des Flugzeugs gemäß Fig. 1 mit einem der Flugzeugtriebwerke und mit einer Ausführungsform einer Tragstrukturanordnung; und
Fig. 5 eine schematische Draufsicht auf den in Fig. 4 gezeigten Teil des Flugzeugs mit dem Flugzeugtriebwerk und der Tragstrukturanordnung.

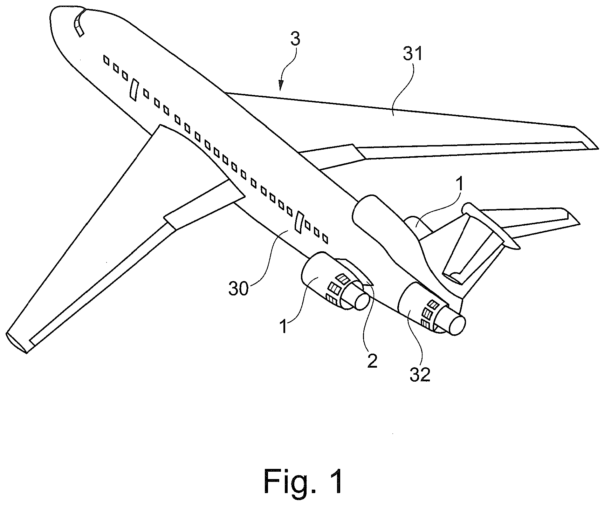

Fig. 1 zeigt ein Flugzeug 3 mit mehreren Flugzeugtriebwerken, mittels denen das Flugzeug 3 antreibbar ist. Vorliegend umfasst das Flugzeug 3 zwei Flugzeugtriebwerke 1, die jeweils mittels einer Tragstruktur 2 in Form eines Triebwerkspylons am Flugzeug 3 befestigt sind, und ein optionales Hilfstriebwerk 32, das zentral am Heck des Flugzeugs 3 angeordnet ist.

Die beiden jeweils mittels einer Tragstruktur 2 am Flugzeug 3 befestigten Flugzeugtriebwerke 1 sind auf gegenüberliegenden Seiten des Flugzeugs 3 an einem Rumpf 30 des Flugzeugs 3 montiert, vorliegend im Bereich des Hecks des Flugzeugs 3. Alternativ oder zusätzlich können Flugzeugtriebwerke 1 mittels der Tragstruktur 2 auch an Flügeln 31 des Flugzeugs montiert sein.

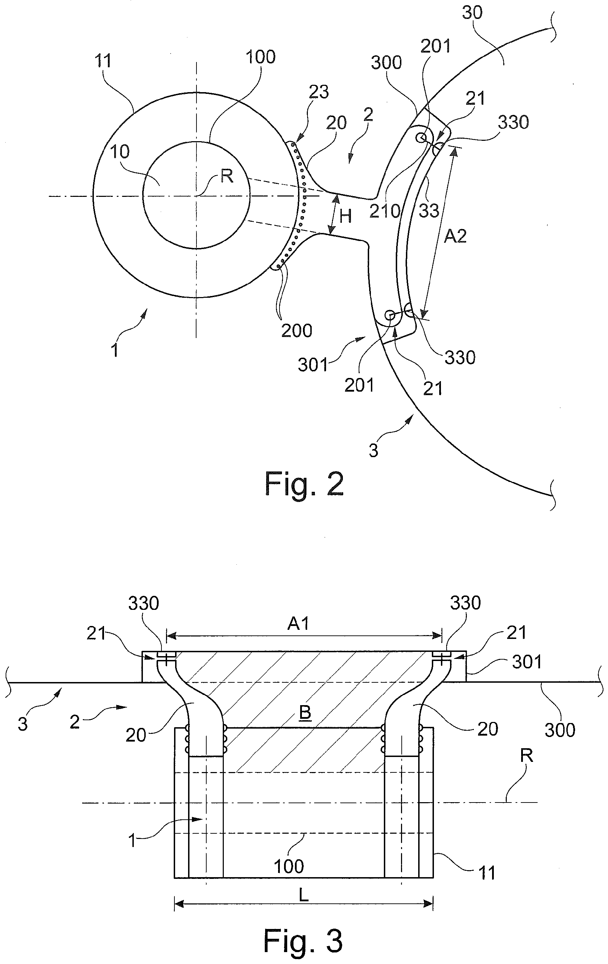

Die Fig. 2 und 3 zeigen verschiedene Ansichten eines der Flugzeugtriebwerke 1 mit dessen am Rumpf 30 des Flugzeugs 3 montierten Tragstruktur 2.

Das Flugzeugtriebwerk 1 umfasst ein Kerntriebwerk 10, in welchem eine Verbrennung von Treibstoff stattfindet. Das Kerntriebwerk 10 umfasst eine Kerntriebwerkshülle 100. Das Kerntriebwerk 10 ist zumindest teilweise von einem äußeren Gehäuse 11 umschlossen. Vorliegend ist das Gehäuse 11 als tragendes Strukturelement ausgebildet, kann also die übrigen Komponenten des Flugzeugtriebwerks 1 tragen. Das Flugzeugtriebwerk 1 ist vorliegend als Strahltriebwerk ausgebildet (z.B. als Turbofan-Triebwerk) und umfasst insbesondere einen Verdichter und eine Turbine, die um eine Hauptrotationsachse R rotierbar sind.

Zusammen mit dem Gehäuse 11 bildet die Tragstruktur 2 eine Tragstrukturanordnung zur Befestigung des Flugzeugtriebwerks 1 am Flugzeug 3.

Die Tragstruktur 2 umfasst zwei Träger 20. In der Seitenansicht (siehe insbesondere Fig. 2) weist jeder der Träger 20 im gezeigten Beispiel eine H-Form oder Doppel-T-Form auf, wobei selbstverständlich auch andere Formen möglich sind.

Jeder der Träger 20 umfasst einen ersten Verbindungsabschnitt, der in flächiger Anlage mit einem Verbindungsabschnitt des Gehäuses 11 des Flugzeugtriebwerks 1 steht. Jeder der Träger 20 umfasst mehrere Befestigungsstellen 200 im Bereich des ersten Verbindungsabschnitts. Die Befestigungsstellen 200 sind z.B. Löcher für Schrauben oder Bolzen. An den Verbindungsabschnitten des Gehäuses 11 sind entsprechende Befestigungsstellen ausgebildet. Die Tragstruktur 2 umfasst ferner mehrere Schrauben oder Bolzen, mittels denen die mehreren Befestigungsstellen 200 der Träger 20 mit denen des Gehäuses 11 fest verbunden sind. Hierdurch wird pro Träger 20 jeweils (zumindest) eine Verbindungseinrichtung 23 bereitgestellt, die den Träger 20 starr mit dem Gehäuse 11 verbindet.

Zwischen dem Träger 20 und dem Gehäuse 11 ist unter bestimmungsgemäßen Betriebsbedingungen des Flugzeugtriebwerks 1 und der Tragstruktur 2 keine Relativbewegung möglich. Durch den Einsatz von Schrauben oder Bolzen (oder anderer lösbarer Verbindungsmittel) ist die Verbindungseinrichtung 23 lösbar. Das Flugzeugtriebwerk 1 kann somit demontiert und/oder montiert werden, ohne dass die Trageinrichtung 2 am Flugzeug 3 montiert und/oder davon demontiert werden muss. Alternativ umfasst die Verbindungseinrichtung 23 eine unlösbare Verbindung, z.B. eine Schweißverbindung.

Der vordere Träger 20 ist z.B. fest mit einem Fangehäuse des Gehäuses 11 verbunden, wobei das Fangehäuse einen Fan des Flugzeugtriebwerks 1 aufnimmt. Der hintere Träger 20 ist optional fest mit einem Teil des Gehäuses 10 im Bereich einer Turbine und/oder einer Düse verbunden. Der vordere Träger 20 ist in einer Ausgestaltung massiver ausgebildet als der hintere Träger 20. Beispielsweise ist der vordere Träger 20 zumindest abschnittsweise größer oder dicker ausgebildet als der hintere Träger 20.

In einem Verfahren zur Herstellung der Tragstrukturanordnung kann eine topologische Optimierungsmethode angewandt werden, um die Materialverteilung zwischen den Trägern 20 der Tragstrukturanordnung zu ermitteln (z.B. mit dem Resultat, dass der vordere Träger 20 mehr Material aufweist als der hintere Träger 20). Beispielsweise wird dabei eine Pylonhöhe H ermittelt, wie anhand des Pfeils in Fig. 2 ersichtlich. Daraufhin wird die Tragstrukturanordnung montiert, so wie in Fig. 2 gezeigt.

Jeder der Träger 20 umfasst an einer dem ersten Verbindungsabschnitt gegenüberliegenden Seite einen zweiten Verbindungsabschnitt. Über den zweiten Verbindungsabschnitt ist jeder der Träger 20 mit dem Flugzeug 3 verbunden. Hierzu umfasst die Tragstruktur mehrere Lager 21, vorliegend jeweils zwei Lager 21 pro Träger 20.

Beide Verbindungsabschnitte (die vertikalen Balken der H-Form) von jedem der Träger 20 erstrecken sich entlang des Umfangs des Flugzeugtriebwerks 1 bzw. des Rumpf 30 des Flugzeugs 3. Entlang der jeweiligen Umfangsrichtung ist der zweite Verbindungsabschnitt länger als der erste Verbindungsabschnitt. Dies wird insbesondere durch die starre Verbindung am ersten Verbindungsabschnitt ermöglicht.

Jedes der Lager 21 weist zumindest einen Freiheitsgrad auf, stellt für sich genommen also keine starre Verbindung bereit.

Die Träger 20 sind beabstandet voneinander angeordnet, vorliegend in einer Richtung parallel zur Hauptrotationsachse R des Flugzeugtriebwerks 1 (oder parallel zur Zylinderachse des zumindest abschnittsweise zylinderförmigen Gehäuses 11). Wie in Fig. 3 gezeigt, weisen die Träger 20 einen gebogenen Abschnitt auf, vorliegend einen S-förmig gebogenen Abschnitt. Hierdurch sind der erste und der zweite Verbindungsabschnitt jedes der Träger 20 versetzt zueinander angeordnet. Die Lager 21 des einen Trägers 20 weisen einen Abstand A1 zu den Lagern 21 des anderen Trägers 20 auf. Dieser Abstand A1 ist größer als der Abstand der ersten Verbindungsbereiche der beiden Träger 20 zueinander. Der Abstand A1 ist größer als die Länge L des Flugzeugtriebwerks 1, insbesondere größer als die Länge des Kerntriebwerks 10 und des Gehäuses 11. Der Abstand A1 der Lager 21 des einen Trägers 20 zu denen des anderen Trägers 20 ist somit gegenüber dem Flugzeugtriebwerk 1 axial vergrößert. Durch diesen vergrößerten Abstand A1 können die Kräfte im Betrieb des Flugzeugtriebwerks 1 besonders gut in den Rumpf 30 des Flugzeugs 3 eingeleitet werden. Hierdurch können bei gleichzeitiger Vergrößerung eines Bauraums B zwischen den Trägern 20 (wie weiter unten näher erläutert werden wird) die einwirkenden Kräfte reduziert werden.

Optional weist nur einer der beiden Träger 20, insbesondere der in Flugrichtung betrachtet hintere Träger 20 einen gebogenen Abschnitt auf. Der andere der beiden Träger 20 kann in einer Ansicht senkrecht zur Hauptrotationsrichtung R im Wesentlichen gerade ausgebildet sein.

Bei jedem der Träger 20 sind die Lager 21 des Trägers 20 voneinander beabstandet, vorliegend in einer Richtung senkrecht zur Hauptrotationsachse R des Flugzeugtriebwerks 1 (oder senkrecht zur Zylinderachse des zumindest abschnittsweise zylinderförmigen Gehäuses 11). Die Lager 21 jedes der Träger 20 weisen einen Abstand A2 zueinander auf. Der Abstand A2 zwischen den Lagern 21 ist größer als der minimale Durchmesser der Tragstruktur 2 zwischen dem Flugzeugtriebwerk 1 und dem Flugzeug 3 in einer Richtung parallel zur direkten Verbindungslinie zwischen den zumindest zwei Lagern 21. Dieser minimale Durchmesser der Tragstruktur 2 entspricht der Pylonhöhe H. Hierdurch wird eine besonders stabile Lagerung der Flugzeugturbine 1 ermöglicht.

Zwischen den Trägern 20 wird ein Bauraum B aufgespannt oder bereitgestellt. Durch den Abstand der Träger 20 zueinander, den Abstand A1 der Lager 21 des einen Trägers 20 zu den Lagern 21 des anderen Trägers 20 und den Abstand A2 der Lager 21 des jeweiligen Trägers 20 zueinander ist der Bauraum B besonders groß. Zudem können die einwirkenden Kräfte reduziert werden.

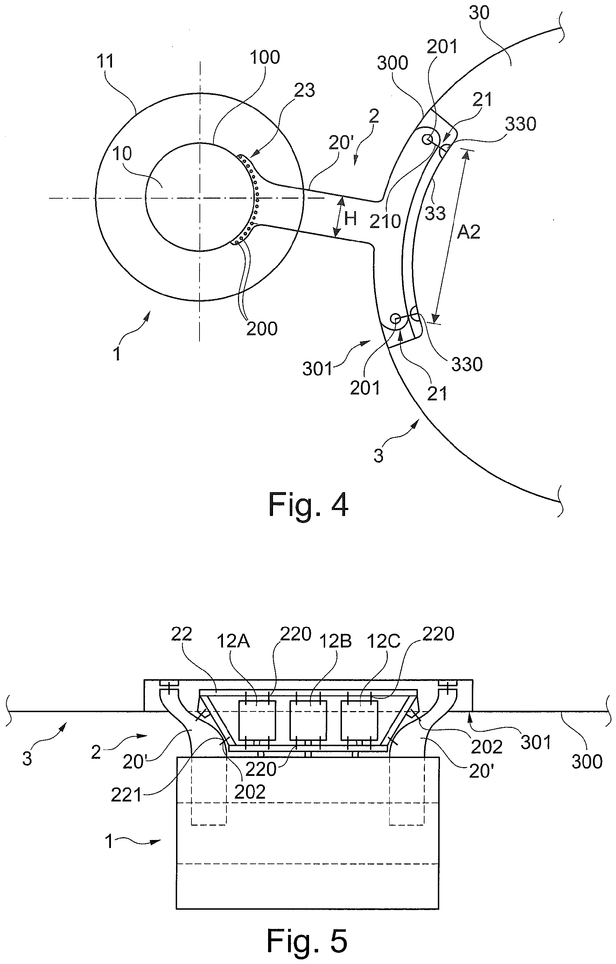

Im Bauraum B können Zubehörkomponenten des Flugzeugtriebwerks 1 angeordnet werden, wie nachfolgend im Zusammenhang mit den Fig. 4 und 5 noch im Detail erläutert werden wird. Diese müssen somit nicht innerhalb des Gehäuses 11 untergebracht werden, wodurch das Gehäuse 11 einen besonders geringen Querschnitt aufweisen kann. Hierdurch kann der Luftwiderstand des Flugzeugtriebwerks 1 deutlich reduziert werden.

Zudem ist der Bauraum B zwischen dem Flugzeug 3 und dem Flugzeugtriebwerk 1 besonders gut zugänglich, z.B. für Installations- und Wartungsarbeiten.

Durch eine Anordnung der Zubehörkomponenten im Bauraum B und damit näher am Rumpf 30 des Flugzeugs 3 können die Träger 20 besonders materialsparend ausgebildet werden, was zu einer Gewichtseinsparung führen kann.

Jedes der Lager 21 umfasst eine am Träger 20 ausgebildete Lagerstelle 201, eine am Flugzeug 3 ausgebildete Befestigungsstelle 330 und ein elastisches Element 210 (oder allgemein ein Dämpfungselement). Das elastische Element 210 ist im Lastpfad oder Kraftfluss zwischen der Lagerstelle 201 des Trägers 20 und der Befestigungsstelle 330 des Flugzeugs 3 angeordnet. So kann das elastische Element 210 Vibrationen dämpfen. Das elastische Element 210 kann den zumindest einen Freiheitsgrad des Lagers bereitstellen. Alternativ oder zusätzlich umfasst das Lager 21 z.B. eine Schwenkverbindung. Hierdurch kann eine thermische Ausdehnung oder Kontraktion des Trägers 21 oder anderer Bauteile gestattet werden, ohne dass es zu Spannungen in den Lagern 21 kommt.

Wie anhand von Fig. 2 und 3 veranschaulicht, sind die Befestigungsstellen 330 am Flugzeug 3 nicht außen an einer äußeren Hülle 300 des Rumpfs 30 des Flugzeugs 3 angeordnet, sondern innerhalb einer in der Hülle 300 ausgebildeten Aussparung oder Tasche 301. Die Befestigungsstellen 300 sind somit gegenüber der äußeren Hülle 300 zurückgesetzt (ins Innere des Rumpfs 30). Hierdurch sind die zweiten Verbindungsabschnitte der Träger 20 innerhalb der der Hülle 300 angeordnet (innerhalb einer durchgehend konvexen Form der Hülle 300). Dadurch ist es möglich, den Bauraum B zu vergrößern und/oder den Luftwiderstand gegenüber einer Anordnung außerhalb der Hülle 300 deutlich zu reduzieren oder zumindest nicht zu erhöhen.

Die Befestigungsstellen 330 des Flugzeugs 3 sind an einer tragenden Struktur 33 des Flugzeugs 3 fixiert oder angeformt, z.B. in Form eines tragenden Rahmens des Flugzeugs 3.

Durch die Tasche 301 kann ferner ein weiter vergrößerter Bauraum B bereitgestellt werden. Der Bauraum B erstreckt sich somit ins Innere des Rumpfs 30. Ein Gehäuse der Tragstrukturanordnung kann den Bauraum B einschließen.

Die Fig. 4 und 5 zeigen eine Ausführung einer Tragstrukturanordnung zur Befestigung des Flugzeugtriebwerks 1 am Flugzeug 3, wobei als tragendes Strukturelement die Kerntriebwerkshülle 100 des Flugzeugtriebwerks 1 dient. Die Träger 20' der Tragstruktur 2 erstrecken sich somit in das Gehäuse 11 des Flugzeugtriebwerks 1 hinein. Der jeweilige erste Verbindungsabschnitt der Träger 20 steht in flächiger Anlage mit einem entsprechenden Verbindungsabschnitt der Kerntriebwerkshülle 100. Entsprechend der Ausführung gemäß Fig. 2 und 3 ist jeweils eine Verbindungseinrichtung 23 vorgesehen, die eine starre Verbindung des Trägers 20' mit dem tragenden Strukturelement bereitstellt, hier der Kerntriebwerkshülle 100.

Wie insbesondere anhand von Fig. 5 veranschaulicht, umfasst die Tragstrukturanordnung ferner einen Installationsrahmen 22. Der Installationsrahmen 22 kann als sogenannter Spaceframe ausgebildet sein. Der Installationsrahmen 22 trägt mehrere Zubehörkomponenten 12A-12C des Flugzeugtriebwerks 1. Eine Zubehörkomponente 12A umfasst einen Steuerungscomputer des Flugzeugtriebwerks 1. Der Steuerungscomputer ist durch Kabel mit zumindest einem Stellglied und/oder zumindest einem Sensor des Flugzeugtriebwerks 1 innerhalb des Gehäuses 11 verbunden. Eine Zubehörkomponente 12B umfasst ein Getriebe des Flugzeugtriebwerks 1. Bei dem Getriebe handelt es sich z.B. um ein Hilfsgetriebe, das von einer Welle antreibbar ist, die mit einer um die Hauptrotationsachse R drehbaren Triebwerkswelle wirkverbunden ist. Eine Zubehörkomponente 12C umfasst eine Versorgungseinrichtung. Die Versorgungseinrichtung stellt beispielsweise elektrischen Strom und/oder ein Fluid an das Flugzeugtriebwerk 1 bereit, insbesondere Treibstoff und/oder Schmiermittel. Die Treibstoffzufuhr kann über eine Zufuhrleitung erfolgen, die sich vom Bauraum B (z.B. zumindest abschnittsweise geradlinig) in einen dem Bauraum B zugewandten Bereich des Kerntriebwerks 10 hinein erstreckt, was eine besonders kurze und einfache Leitungsführung erlaubt.

Jede der Zubehörkomponenten 12A-12C ist an Lagerstellen 220 des Installationsrahmens 22 gelagert.

Der Installationsrahmen 22 ist an Lagerstellen 202 der Träger 20' an den Trägern 20' montiert. Zur Dämpfung von Vibrationen ist der Installationsrahmen 22 mittels Stoßdämpfern 221 (z.B. in Form von elastischen Elementen) an den Lagerstellen 202 der Träger 20' angebunden. Somit können mehrere Zubehörkomponenten 12A-12C gemeinsam gegen Vibrationen geschützt werden, was einen vereinfachten Aufbau ermöglicht. Alternativ oder zusätzlich könnte der Installationsrahmen 22 auch am Flugzeug 3 und/oder am Flugzeugtriebwerk 1 montiert sein.

Der Einsatz des Installationsrahmens 22 ermöglicht es, dass mehrere Zubehörkomponenten 12A-12C gemeinsam ein- und ausgebaut werden können. Hierdurch kann die Wartung des Flugzeugtriebwerks 1 deutlich erleichtert werden. Der Anschluss der Zubehörkomponenten 12A-12C an das Flugzeugtriebwerk 1, insbesondere an das Kerntriebwerk 10, kann mittels standardisierter Schnittstellen für Treibstoff, Luft, Öl und Signale bereitgestellt werden. Der Installationsrahmen 22 ermöglicht den Einsatz solcher standardisierter Schnittstellen.

Ferner kann der bestückte Installationsrahmen 22 als Ganzes getestet werden, d.h. nicht jede Zubehörkomponente muss einzeln getestet werden, was Qualifizierungs- und Freigabekosten reduzieren kann.

Indem die Zubehörkomponenten 12A-12C nicht unmittelbar am Kerntriebwerk 10 angeordnet sind, sondern im Bauraum B, ist es leichter, sie vor hohen Temperaturen im Betrieb des Flugzeugtriebwerks 1 abzuschirmen. Optional ist der Installationsrahmen 22 insgesamt mit einer Wärmeisolierung versehen, die in einfacher Weise mehrere Zubehörkomponenten 12A-12C gemeinsam vor Temperaturbelastungen schützen kann.

Somit können mit dem Tragen des Flugzeugtriebwerks 1 und der Zubehörkomponenten 12A-12C mehrere Funktionalitäten in die Tragstruktur 2 integriert werden.

Im Übrigen stimmt die Ausführung der Tragstrukturanordnung gemäß Fig. 4 und 5 mit der gemäß Fig. 2 und 3 überein, sodass auf die diesbezüglichen Ausführungen Bezug genommen wird. Umgekehrt kann auch die Ausführung gemäß Fig. 2 und 3 einen Installationsrahmen 22 gemäß Fig. 4 und 5 umfassen.

Bei dem Flugzeug 3 kann es sich insbesondere um ein Überschallflugzeug handeln. Flugzeugtriebwerke 1 von Überschallflugzeugen sind regelmäßig besonders lang, sodass in diesem Fall mit den vorstehend beschriebenen Tragstrukturanordnungen ein besonders großer Bauraum B entsteht.

### Bezugszeichenliste

1 Flugzeugtriebwerk
10 Kerntriebwerk
100 Kerntriebwerkshülle
11 Gehäuse
12A-12C Zubehörkomponente
2 Tragstruktur
20, 20' Träger
200 Befestigungsstelle
201 Lagerstelle
202 Lagerstelle
21 Lager
210 elastisches Element
22 Installationsrahmen
220 Lagerstelle
221 Stoßdämpfer
23 Verbindungseinrichtung
3 Flugzeug
30 Rumpf
300 Hülle
301 Tasche
31 Flügel
32 Hilfstriebwerk
33 tragende Struktur
330 Befestigungsstelle
A1, A2 Abstand
B Bauraum
H Pylonhöhe
L Länge
R Hauptrotationsachse

## Patentansprüche

1. Tragstrukturanordnung zur Befestigung eines Flugzeugtriebwerks (1) an einem Flugzeug (3), umfassend:
- ein tragendes Strukturelement (100, 11) des Flugzeugtriebwerks (1) und
- eine Tragstruktur (2) mit zumindest einem Träger (20, 20') und zumindest einem Lager (21), mittels dem der Träger (20, 20') mit dem Flugzeug (3) verbindbar oder verbunden ist,
wobei der Träger (20, 20') mittels einer Verbindungseinrichtung (23) starr mit dem tragenden Strukturelement (100, 11) des Flugzeugtriebwerks (1) verbindbar oder verbunden ist, **dadurch gekennzeichnet, dass** der Träger (20, 20') einen Verbindungsabschnitt umfasst, der in flächiger Anlage mit einem Verbindungsabschnitt eines Gehäuses oder einer Kerntriebwerkshülle des Flugzeugtriebwerks (1) steht.

2. Tragstrukturanordnung nach Anspruch 1, **dadurch gekennzeichnet, dass** das tragende Strukturelement (100, 11) zumindest ein Teil des Gehäuses oder zumindest ein Teil der Kerntriebwerkshülle ist.

3. Tragstrukturanordnung nach Anspruch 1 oder 2, **dadurch gekennzeichnet, dass** zumindest zwei Lager (21) vorgesehen sind, wobei jedes Lager (21) zumindest einen Freiheitsgrad aufweist.

4. Tragstrukturanordnung nach einem der vorhergehenden Ansprüche, **dadurch gekennzeichnet, dass** der zumindest eine Träger (20, 20') zumindest zwei Lager (21) zur Verbindung des Trägers (20, 20') mit dem Flugzeug (3) aufweist, deren Abstand (A2) zueinander größer ist, als der minimale Durchmesser (H) der Tragstruktur (2) zwischen dem Flugzeugtriebwerk (1) und dem Flugzeug (3) in einer Richtung parallel zur direkten Verbindungslinie zwischen den zumindest zwei Lagern (21).

5. Tragstrukturanordnung nach einem der vorhergehenden Ansprüche, **gekennzeichnet durch** zumindest zwei voneinander beabstandete Träger (20, 20') der Tragstruktur (2).

6. Tragstrukturanordnung nach Anspruch 5, **dadurch gekennzeichnet, dass** bei mit dem Flugzeugtriebwerk (1) verbundenen Trägern (20, 20') das zumindest eine Lager (21) eines der zumindest zwei Träger (20, 20') einen Abstand (A1) zu zumindest einem Lager (201) eines anderen der zumindest zwei Träger (20, 20') aufweist, der größer ist als eine Länge (L) des Kerntriebwerks (10) und/oder des Gehäuses (11) des Flugzeugtriebwerks (1).

7. Tragstrukturanordnung nach Anspruch 5 oder 6, **dadurch gekennzeichnet, dass** zumindest eine Zubehörkomponente (12A-12C) des Flugzeugtriebwerks (1) zwischen den zumindest zwei axial beabstandeten Trägern (20, 20') der Tragstruktur (2) angeordnet ist.

8. Tragstrukturanordnung nach Anspruch 7, **dadurch gekennzeichnet, dass** zumindest eine Zubehörkomponente (12A-12C) ein Getriebe, eine Leitungsanordnung, eine Versorgungseinrichtung und/oder einen Steuerungscomputer umfasst.

9. Tragstrukturanordnung nach Anspruch 7 oder 8, **gekennzeichnet durch** einen zwischen den zumindest den zwei axial beabstandeten Trägern (20, 20') der Tragstruktur (2) angeordneten Installationsrahmen (22), an dem die zumindest eine Zubehörkomponente (12A-12C) befestigt ist.

10. Tragstrukturanordnung nach Anspruch 9, **gekennzeichnet durch** zumindest einen Stoßdämpfer (221), mittels dem der Installationsrahmen (22) am Flugzeugtriebwerk (1), an der Befestigungseinrichtung (2) und/oder am Flugzeug (3) gelagert oder lagerbar ist.

11. Tragstrukturanordnung nach einem der vorhergehenden Ansprüche, **dadurch gekennzeichnet, dass** das Lager (21) einen Stoßdämpfer und/oder ein elastisches Element (210) umfasst, welcher/welches im mit dem Flugzeug (3) verbundenen Zustand im Lastpfad angeordnet ist.

12. Flugzeug (3) mit einem Rumpf (30) und zumindest einem Flugzeugtriebwerk (1), **gekennzeichnet durch** eine Tragstrukturanordnung nach einem der vorhergehenden Ansprüche, wobei das Flugzeugtriebwerk (1) mittels der Tragstruktur (2) der Tragstrukturanordnung am Rumpf (30) des Flugzeugs (3) befestigt ist.

13. Flugzeug (3) nach Anspruch 12, **dadurch gekennzeichnet, dass** das Lager (21) zumindest eine Befestigungsstelle (330) umfasst, die fest mit dem Rumpf (30) des Flugzeugs (3) verbunden ist, und die in einer gegenüber einer äußeren Hülle (300) des Rumpfs (30) des Flugzeugs (3) zurückgesetzten Tasche (301) angeordnet ist.

14. Verfahren zur Herstellung einer Tragstrukturanordnung nach einem der Ansprüche 1 bis 11 mit zumindest zwei voneinander beabstandeten Trägern (20, 20') der Tragstruktur (2), wobei mittels Topologieoptimierung zumindest eines von einem Abstand (A1) zwischen den Trägern (20), einer Höhe (H) von jedem der Träger (20) und einer relativen Materialverteilung der Träger (20) ermittelt wird.

## Claims

1. Supporting structure arrangement for mounting an aircraft gas turbine engine (1) to an aircraft (3), comprising:
- a supporting structural element (100, 11) of the aircraft engine (1) and
- a supporting structure (2) with at least one support (20, 20') and at least one bearing (21), by the supporting structure (2) the support (20, 20') can be connected or is connected to the aircraft (3),
wherein the support (20, 20') can be connected or is connected rigidly to the supporting structural element (100, 11) of the aircraft engine (1) by a connecting device (23), **characterized in that** the support (20, 20') comprises a connecting portion, which lies flat against a connecting portion of a housing or of a core engine case of the aircraft engine (1).

2. Supporting structure arrangement according to Claim 1, **characterized in that** the supporting structural element (100, 11) is at least part of a casing or at least part of a core engine case.

3. Supporting structure arrangement according to Claim 1 or 2, **characterized in that** at least two bearings (21) are provided, each bearing (21) having at least one degree of freedom.

4. Supporting structure arrangement according to one of the preceding claims, **characterized in that** the at least one support (20, 20') has at least two bearings (21) for connecting the support (20, 20') to the aircraft (3), the distance (A2) of the at least two bearings (21) to each otheris greater than the minimum diameter (H) of the supporting structure (2) between the aircraft engine (1) and the aircraft (3) in a direction parallel to the direct connecting line between the at least two bearings (21).

5. Supporting structure arrangement according to one of the preceding claims, **characterized by** at least two spaced-apart supports (20, 20') of the supporting structure (2).

6. Supporting structure arrangement according to Claim 5, **characterized in that**, regarding the supports (20, 20') connected to the aircraft engine (1), the at least one bearing (21) of one of the at least two supports (20, 20') is at a distance (A1) from the at least one bearing (201) of another of the at least two supports (20, 20') that is greater than a length (L) of a core engine (10) and/or a casing (11) of the aircraft engine (1).

7. Supporting structure arrangement according to Claim 5 or 6, **characterized in that** at least one accessory component (12A-12C) of the aircraft engine (1) is arranged between the at least two axially spaced-apart supports (20, 20') of the supporting structure (2) .

8. Supporting structure arrangement according to Claim 7, **characterized in that** at least one accessory component (12A-12C) comprises a transmission, an arrangement of lines, a supply device and/or a control computer.

9. Supporting structure arrangement according to Claim 7 or 8, **characterized by** an installation frame (22), which is arranged between the at least the two axially spaced-apart supports (20, 20') of the supporting structure (2) and to which the at least one accessory component (12A-12C) is mounted.

10. Supporting structure arrangement according to Claim 9, **characterized by** at least one shock absorber (221), by means of which the installation frame (22) is mounted or can be mounted on the aircraft engine (1), on the mounting device (2) and/or on the aircraft (3) .

11. Supporting structure arrangement according to one of the preceding claims, **characterized in that** the bearing (21) comprises a shock absorber and/or an elastic element (210), which, in the state in which it is connected to the aircraft (3), is arranged in the load path.

12. Aircraft (3) with a fuselage (30) and at least one aircraft gas turbine engine (1), **characterized by** a supporting structure arrangement according to one of the preceding claims, the aircraft engine (1) being mounted by the supporting structure (2) of the supporting structure arrangement to the fuselage (30) of the aircraft (3).

13. Aircraft (3) according to Claim 12, **characterized in that** the bearing (21) comprises at least one mounting point (330), which is fixedly connected to the fuselage (30) of the aircraft (3) and which is arranged in a pocket (301) set back from an outer shell (300) of the fuselage (30) of the aircraft (3).

14. Method for producing a supporting structure arrangement according to one of Claims 1 to 11 with at least two spaced-apart supports (20, 20') of the supporting structure (2), wherein, by means of optimization of the topology, at least one out of a distance (A1) between the supports (20), a height (H) of each of the supports (20) and a relative material distribution of the supports (20) is determined.

## Revendications

1. Ensemble de structure portante pour la fixation d'un moteur d'aéronef (1) sur un aéronef (3), comportant :
- un élément structural porteur (100, 11) du moteur d'aéronef (1) et
- une structure portante (2) dotée d'au moins un support (20, 20') et d'au moins un palier (21), au moyen duquel le support (20, 20') peut être relié ou est relié à l'aéronef (3),
le support (20, 20') pouvant être relié ou étant relié rigidement à l'élément structural porteur (100, 11) du moteur d'aéronef (1) au moyen d'un dispositif de liaison (23), **caractérisé en ce que** le support (20, 20') comporte une partie de liaison qui est en appui plan avec une partie de liaison d'un carter ou d'une enveloppe de moteur de base du moteur d'aéronef (1).

2. Ensemble de structure portante selon la revendication 1, **caractérisé en ce que** l'élément structural porteur (100, 11) est au moins une partie du carter ou au moins une partie de l'enveloppe de moteur de base.

3. Ensemble de structure portante selon la revendication 1 ou 2, **caractérisé en ce qu'**au moins deux paliers (21) sont prévus, chaque palier (21) présentant au moins un degré de liberté.

4. Ensemble de structure portante selon l'une des revendications précédentes, **caractérisé en ce que** l'au moins un support (20, 20') comprend au moins deux paliers (21) pour la liaison du support (20, 20') à l'aéronef (3), dont la distance (A2) l'un par rapport à l'autre est supérieure au diamètre minimal (H) de la structure portante (2) entre le moteur d'aéronef (1) et l'aéronef (3) dans une direction parallèle à la ligne de liaison directe entre les au moins deux paliers (21).

5. Ensemble de structure portante selon l'une des revendications précédentes, **caractérisé par** au moins deux supports (20, 20'), espacés les uns des autres, de la structure portante (2).

6. Ensemble de structure portante selon la revendication 5, **caractérisé en ce que**, dans le cas de supports (20, 20') reliés au moteur d'aéronef (1), l'au moins un palier (21) de l'un des au moins deux supports (20, 20') présente une distance (A1) à au moins un palier (201) d'un autre des au moins deux supports (20, 20') qui est supérieure à une longueur (L) du moteur de base (10) et/ou du carter (11) du moteur d'aéronef (1).

7. Ensemble de structure portante selon la revendication 5 ou 6, **caractérisé en ce qu'**au moins un composant accessoire (12A-12C) du moteur d'aéronef (1) est disposé entre les au moins deux supports (20, 20'), espacés axialement, de la structure portante (2).

8. Ensemble de structure portante selon la revendication 7, **caractérisé en ce qu'**au moins un composant accessoire (12A-12C) comporte une transmission, un ensemble de lignes, un dispositif d'alimentation et/ou un ordinateur de commande.

9. Ensemble de structure portante selon la revendication 7 ou 8, **caractérisé par** un cadre d'installation (22) disposé entre les au moins deux supports (20, 20'), espacés axialement, de la structure portante (2), cadre auquel l'au moins un composant accessoire (12A-12C) est fixé.

10. Ensemble de structure portante selon la revendication 9, **caractérisé par** au moins un amortisseur de choc (221), au moyen duquel le cadre d'installation (22) est monté ou peut être monté sur le moteur d'aéronef (1), sur le dispositif de fixation (2) et/ou sur l'aéronef (3).

11. Ensemble de structure portante selon l'une des revendications précédentes, **caractérisé en ce que** le palier (21) comporte un amortisseur de choc et/ou un élément élastique (210), lequel est disposé dans le trajet de charge à l'état relié à l'aéronef (3).

12. Aéronef (3) comportant un fuselage (30) et au moins un moteur d'aéronef (1), **caractérisé par** un ensemble de structure portante selon l'une des revendications précédentes, le moteur d'aéronef (1) étant fixé au fuselage (30) de l'aéronef (3) au moyen de la structure portante (2) de l'ensemble de structure portante.

13. Aéronef (3) selon la revendication 12, **caractérisé en ce que** le palier (21) comporte au moins un point de fixation (330) qui est relié fixement au fuselage (30) de l'aéronef (3), et qui est disposé dans une cavité (301) en retrait par rapport à une enveloppe extérieure (300) du fuselage (30) de l'aéronef (3).

14. Procédé de fabrication d'un ensemble de structure portante selon l'une des revendications 1 à 11 comportant au moins deux supports (20, 20'), espacés les uns des autres, de la structure portante (2), au moins l'une parmi une distance (A1) entre les supports (20), une hauteur (H) de chacun des supports (20) et une répartition de matière relative des supports (20) étant déterminée par optimisation topologique.
